# EUROPÄISCHE PATENTSCHRIFT

(11) **EP 0 938 821 B1**
(45) Veröffentlichungstag und Bekanntmachung des Hinweises auf die Patenterteilung: **04.02.2004**
(21) Anmeldenummer: 97948720.4
(22) Anmeldetag: 06.11.1997
(51) Int. Cl.: H04Q 7/22, H04Q 7/26, H04J 3/06

(54) **VERFAHREN UND BASISSTATIONSYSTEM ZUR KONFIGURIERUNG EINER FUNKSCHNITTSTELLE ZWISCHEN EINER MOBILSTATION UND EINER BASISSTATION EINES ZEITMULTIPLEX-MOBILFUNKSYSTEMS FÜR EINE PAKETDATENÜBERTRAGUNG**
PROCESS AND BASE STATION SYSTEM FOR CONFIGURING AN AIR INTERFACE BETWEEN A MOBILE STATION AND A BASE STATION IN A TIME-DIVISION MULTIPLEX MOBILE RADIO TELEPHONE SYSTEM FOR PACKET DATA TRANSMISSION
PROCEDE ET SYSTEME DE STATION DE BASE POUR LA CONFIGURATION D'UNE INTERFACE RADIO ENTRE UNE STATION MOBILE ET UNE STATION DE BASE D'UN SYSTEME RADIO TELEPHONIQUE MOBILE A MULTIPLEXAGE DANS LE TEMPS POUR UNE TRANSMISSION DE DONNEES PAR PAQUETS

(30) Priorität: 18.11.1996 DE 19647629; 16.12.1996 DE 19652303
(43) Veröffentlichungstag der Anmeldung: 01.09.1999
(73) Patentinhaber: SIEMENS AKTIENGESELLSCHAFT, 80333 München (DE)
(72) Erfinder: MENZEL, Christian, D-82216 Maisach (DE); ÖTTL, Martin, D-82362 Weilheim (DE)
(86) Internationale Anmeldenummer: PCT/DE1997/002582
(87) Internationale Veröffentlichungsnummer: WO 1998/023105

(56) Entgegenhaltungen:
- EP-A- 0 681 406
- DE-C- 19 534 156
- BRASCHE G: "EVALUATION OF A MAC PROTOCOL PROPOSED FOR A GENERAL PACKET RADIO SERVICE IN GSM" IEEE INTERNATIONAL SYMPOSIUM ON PERSONAL, INDOOR AND MOBILE RADIO COMMUNICATIONS, Bd. 2, 15. Oktober 1996, Seiten 668-672, XP000198338
- DECKER P: "A PACKET RADIO PROTOCOL FOR GROUP COMMUNICATION SUITABLE FOR THE GSM MOBILE RADIO NETWORK" IEEE INTERNATIONAL SYMPOSIUM ON PERSONAL, INDOOR AND MOBILE RADIO COMMUNICATIONS, 1994, Seiten 934-938, XP000197665

## Beschreibung

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der Dauer der gesamten Datenübertragung eine logische Verbindung zwischen den zwei Kommunikationsendgeräten, jedoch werden physikalische Ressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Das aus DE 44 02 903 A1 und EP 0 681 406 A1 bekannte Paketdatenübertragungsverfahren bietet sich insbesondere für Kommunikationssysteme mit begrenzten physikalischen Ressourcen an. Beispielsweise in Mobilfunksystemen, wie dem GSM-Mobilfunksystem (Global System for Mobile Communications), sind die physikalischen Ressourcen im Frequenzbereich - Anzahl der Frequenzkanäle und Zeitschlitz - beschränkt und müssen rationell genützt werden.

Das GSM-Mobilfunksystem ist ein Beispiel für ein Zeitmultiplex-Mobilfunksystem, wobei Zeitschlitze innerhalb eines Frequenzkanals auf verschiedene Kommunikationsendgeräte aufgeteilt werden können. Die netzseitige Funkstation eines Mobilfunknetzes ist eine Basisstation, die über eine Funkschnittstelle mit Mobilstationen kommuniziert. Die Übertragung von einer Mobilstation zur Basisstation wird als Aufwärtsrichtung, die Übertragung von der Basisstation zu einer Mobilstation als Abwärtsrichtung bezeichnet. Ein Kanal, der für die Paketdatenübertragung reserviert ist, wird durch zumindest einen Zeitschlitz pro Zeitmultiplexrahmen gebildet. Weiterhin bezeichnen die Trägerfrequenz und evtentuell eine Frequenzsprungsequenz den Kanal.

Das GSM-Mobilfunksystem wurde ursprünglich zur Übertragung von Sprache konzipiert, wobei ein Kanal für die ständige Informationsübertragung zwischen Mobilstation und Basisstation reserviert wurde. Bei der Paketdatenübertragung wird jedoch ein gemeinsamer Kanal zur Paketdatenübertragung für mehrere Mobilstationen genutzt. Zusätzlich zu den Paketdaten werden auch Signalisierungsinformationen übertragen, für die in zyklischen Abständen ein Zeitschlitz innerhalb des Kanals vorgesehen ist.

Die Unterscheidung in logische und physikalische Verbindungen bringt es mit sich, daß für eine Mobilstation zwar eine logische Verbindung existiert, doch über eine gewisse Zeitspanne keine Paketdaten übertragen werden. Solange jedoch keine Übertragung von der Mobilstation zur Basisstation erfolgt, sind Messungen der Basisstation bezüglich der Übertragungsverhältnisse von der Mobilstation nicht möglich. Zuvor berechnete Werte verlieren ihre Gültigkeit und müssen bei erneuter Zuweisung von physikalischen Kanälen neu bestimmt werden bzw. die Basisstation hat sicherzustellen, daß die Übertragungsverhältnisse derart eingestellt werden, daß in jedem Fall eine gesicherte Übertragung möglich ist. Letzteres führt beispielsweise zu einer überhöhten oder gar maximalen Sendeleistungseinstellung. Aus DE 195 34 156 Cl ist es bekannt, eine Vorhaltzeitbestimmung bei Nichtvorliegen bestimmter Entscheidungskriterien zu unterdrücken.

Der Erfindung liegt folglich die Aufgabe zugrunde, ein Verfahren und eine Basisstationssystem mit verbesserter Konfigurierung einer Luftschnittstelle für eine Paketdatenübertragung anzugeben. Diese Aufgabe wird durch das Verfahren mit den Merkmalen des Patentanspruchs 1 und durch das Basisstationssystem mit den Merkmalen des Patentanspruchs 16 gelöst. Vorteilhafte Weiterbildungen der Erfindung sind den Unteransprüchen zu entnehmen.

Erfindungsgemäß werden den Mobilstationen nach einer vorgebbaren Sequenz Zeitschlitze zur Signalisierung für die Aufwärtsrichtung zugewiesen. Die Zuweisung ist unabhängig von einer Paketdatenübertragung von oder zur Mobilstation. Durch diese feste Zuweisung eines Zeitschlitzes zur Signalisierung auch für Mobilstationen, denen momentan kein physikalischer Kanal zugewiesen ist, kann durch die Basisstation eine fortlaufende Messung zur Funkschnittstelle für eine Bestimmung einer Vorhaltzeit durchgeführt werden. Bei Wiederaufnahme der Paketdatenübertragung liegen somit sofort gültige Meßwerte zur Konfigurierung der Funkschnittstelle vor.

Bei einem alternativen Verfahren zur Konfigurierung der Funkschnittstelle werden in einem Zeitschlitz zur Signalisierung Konfigurationsdaten bezüglich der Funkschnittstelle für mehrere Mobilstationen zusammengefaßt und übertragen. Eine solche Signalisierung ist für die Abwärtsrichtung von Bedeutung, da über ihn Informationen zur Konfigurierung der Funkschnittstelle für die Mobilstation, beispielsweise die Werte zur Sendeleistungseinstellung bzw. die Vorhaltzeit (Timing Advance) für den Sendezeitpunkt, enthalten sind. Da pro Mobilstation nur wenige Angaben benötigt werden spart ein Zusammenfassen der Konfigurationsdaten in einer Nachricht, Übertragungskapazität, die für Nachbarzellenmessungen oder anderweitige Signalisierungsinformationen nunmehr zur Verfügung steht.

Die Konfigurationsdaten für eine Mobilstation können zusammen mit den Konfigurationsdaten für andere Mobilstationen in einem einzigen Zeitschlitz zur Signalisierung in Abwärtsrichtung, in diesem Fall vorteilhafterweise in Wiederholung oder mit einer Kodierung bzw. Fehlererkennung versehen, oder mehreren nicht aufeinanderfolgenden Zeitschlitzen zur Signalisierung übertragen werden. Im letzteren Fall bringt die Verschachtelung einen Fehlerschutz. Welche Zeitschitze zu einem solchen Signalisierungsblock zusammengefaßt werden kann eingestellt werden. Bei einer solchen Nutzung z.B. jedes zweiten Zeitschlitzes zur Signalisierung können die dazwischenliegenden Zeitschlitze zu Nachbarzellenmessungen genutzt werden.

Der Anteil der Zeitschlitze für die Nachbarzellenmessungen kann weiter erhöht werden, wenn weniger Konfigurationsdaten (beispielsweise nur die Vorhaltzeit) übertragen werden bzw. nur wenige Mobilstationen zu versorgen sind. Hierbei kann eine zyklische Anpassung der Sequenz des Zusammenfassens vorgesehen sein. Eine solche Anpassung schafft eine verbesserte Anpassung des Signalisierungsaufwandes an die tatsächlichen Bedürfnisse der Mobilstationen für eine Paketdatenübertragung.

Gemäß der Erfindung ist ein geschlossener Regelkreis für die Vorhaltzeit erreichbar, da Mobilstationen in Aufwärtsrichtung Zeitschlitze zur Signalisierung zugewiesen sind und in Abwärtsrichtung Signalisierungsblöcke für die Mobilstationen mit kurzer Verzögerungszeit eintreffen. An diesem Regelkreis sind vorteilhafterweise nur die Mobilstation und die Basisstation beteiligt. Da für diese Signalisierung im Gegensatz zur Paketdatenübertragung keine konkrete Zuordnung zwischen einer Mobilstation und einem Datenblock (wird üblicherweise in einem Basisstationscontroller durchgeführt) nötig ist, kann die Basisstation allein die Einstellung der Vorhaltzeit vornehmen. Hierbei entfällt Signalisierungsaufwand zwischen der Basisstation und dem Basisstationscontroller.

Die Konfiguration für die Vorhaltzeit und die Sendeleistungseinstellung erfolgt gemäß einer weiteren Ausgestaltung der Erfindung unabhängig voneinander. Die Vorhaltzeit wird nach einem geschlossenen Regelkreis zwischen Mobilstation und Basisstation bestimmt, wobei durch geeignete Auswahl der Zeitschlitze zur Signalisierung ein längerer Zyklus zwischen zwei Bestimmungen vorgesehen werden kann. Die Vorhaltzeit braucht angesichts der zur Signalausbreitungsgeschwindigkeit relativ langsamen Bewegung der Mobilstation nur im Abstand von einigen Sekunden bestimmt werden.

Bei der Bestimmung der Sendeleistungseinstellung der Basisstation wird die Sendeleistung vorteilhafterweise auf die Mobilstation mit den schlechtesten Übertragungsverbindungen auf dem gemeinsamen Kanal ausgerichtet. Dazu können unabhängig von einer Bestimmung der Vorhaltzeit offene oder geschlossene Regelkreise eingerichtet werden. Bei starken Unterschieden zwischen den für einzelne Mobilstationen benötigten Sendeleistungen und bei einem Vorhandensein von mehreren gemeinsamen Kanälen ist es vorteilhaft, die Mobilstationen entsprechend der benötigen Sendeleistung den Kanälen zuzuordnen.

Vorteilhafterweise erfolgt die Paketdatenübertragung in beide Übertragungsrichtungen, d.h. in Aufwärtsrichtung und Abwärtsrichtung, unabhängig voneinander. Eine Mobilstation kann folglich in Aufwärtsrichtung Daten senden oder in Abwärtsrichtung aus dem Netz Daten empfangen. Für eine Mobilstation kann auch eine Paketdatenübertragung in beide Richtungen vorgesehen sein. Die Trennung in Aufwärts- und Abwärtsrichtung ermöglicht eine große Flexibilität bei der Nutzung der funktechnischen Ressourcen und natürlich auch bei der Gestaltung der Mobilstationen, die gegebenenfalls nur senden oder empfangen.

Gemäß einer weiteren vorteilhaften Ausgestaltung sind die Mobilstationen zusätzlich zu ihren Bezeichnungen innerhalb des Mobilfunksystems für die Paketdatenübertragung mit Kurzkennungen bezeichnet. Über die Zeitschlitze zur Signalisierung in Abwärtsrichtung werden den Mobilstationen durch Kurzkennungen und Zeitschlitzbezeichnungen enthaltende Indikatormeldungen ein oder mehrerer Zeitschlitze zur Signalisierung in Aufwärtsrichtung zugewiesen. Die Kurzkennungen ermöglichen eine verbesserte Ressourcennutzung zwischen dem Netz und den Mobilstationen über die Funkschnittstelle, da sie unabhängig von im Netz bekannten Adressen für die Mobilstationen sind.

Vorteilhafterweise wird von einer Mobilstation innerhalb eines Zeitschlitzes zur Signalisierung eine abgeschlossene Meldung an die Basisstation übermittelt. Diese abgeschlossene Meldung enthält beispielsweis Empfangswerte (RXLEV, RXQUAL) der Mobilstation für Signale der Basisstation, wodurch eine sofortige Sendeleistungseinstellung der Basisstation bei einer Paketdatenübertragung in Abwärtsrichtung möglich ist. Indem eine geschlossene Meldung pro Zeitschlitz übermittelt wird, verringert sich die Zeit bis zum Vorliegen des Empfangspegels der Mobilstation bei der Basisstation und die Zeit für die Konfigurierung der Funkschnittstelle. Die Basisstation bestimmt aus Aussendungen zur Signalisierung in Aufwärtsrichtung die Vorhaltzeit bzw. den Empfangspegel der Basisstationen in Bezug auf die jeweilige Mobilstation.

Der oder die bestimmten Werte bzw. Regelwerte für die Vorhaltzeit und die Sendeleistung werden der Mobilstation in Abwärtsrichtung übermittelt, worauf auch diese die notwendigen Einstellungen zur Konfigurierung der Funkschnittstelle vornehmen kann.

Die Konfigurierung wird weiter beschleunigt, wenn die Bestimmung der Vorhaltzeit und/oder des Empfangspegels der Basisstation zusätzlich aus den Zeitschlitzen zur Paketdatenübertragung vorgenommen wird. Auch durch die Zuweisung von Kurzkennungen zu Mobilstationen kann die Einstellzeit der Konfiguration beeinflußt werden. Werden beispielsweise einer Mobilstation mehrere Kurzkennungen zugewiesen, wird die Einstellzeit verkürzt. Ebenso ist es möglich, durch entsprechende Auswahl bestimmter Kurzkennungen zum Ende eines Makrorahmens, die Verzögerungszeiten klein zu halten. Auch die Beschränkung der Anzahl der Kurzkennungen führt zu einer schnelleren Wiederbenutzbarkeit eines Zeitschlitzes zur Signalisierung für eine Mobilstation und zu einer Verkürzung der Verzögerungszeit. Die Anzahl der Kurzkennungen wird vorteilhafterweise entsprechend den Übertragungsverhältnissen und der Anzahl für den Paketdatendienst vorgesehenen Mobilstationen eingestellt.

Werden mehrere Zeitschlitze zur Signalisierung in Abwärtsrichtung zu einem Signalisierungsblock zusammengefaßt, dann erfolgt vorteilhafterweise die Signalsierung gleichzeitig für mehrere Mobilstationen. Die Signalisierung in Abwärtsrichtung kann jedoch ebenfalls innerhalb von Paketdaten erfolgen, so daß beispielsweise die Sendeleistungseinstellung kontinuierlich, ohne Nutzung von Zeitschlitzen zur Signalisierung angepaßt werden kann, und zusätzliche Zeitschlitze zur Nachbarzellenausmessung zur Verfügung stehen.

Auch durch die Wahl von bestimmten Sendeblocktypen kann der Signalisierungsaufwand gesenkt werden. Werden im Gegensatz zu sogenannten Access Burst, normale Sendeblöcke (normal bursts) verwendet, ist eine Empfangsleistungsbestimmung durch Mittelung über eine größere Anzahl von Bits möglich, wodurch die Meßgenauigkeit steigt bzw. eine geringere Anzahl von wiederholten Meßwerten zur Sendeleistungseinstellung benötigt wird. Solche längeren Sendeblöcke werden vorteilhafterweise zur Sendeleistungseinstellung verwendet, wenn bereits gültige Werte für die Vorhaltzeit vorliegen.

Nach einer vorteilhaften Weiterbildung der Erfindung werden bei dem Aussendungen der Mobilstation in den ihr zugeordneten Zeitschlitzen zur Signalisierung Zugriffsblöcke mit einer verlängerten vorangehenden und/oder nachfolgenden Schutzzeit versehen. Der Sendezeitpunkt des Zugriffsblocks ergibt sich aus einem vorhergehenden Sendezeitpunkt, einer signalisierten Vorhaltzeit und einem Offset-Wert. Zusätzlich mit den bestimmten Vorhaltzeiten wird der Offset-Wert berücksichtigt, der ein positiver Wert ist und sicherstellt, daß bei Bewegungen der Mobilstation von der Basisstation weg und auf die Basisstation zu eindeutige Sendezeitpunkte mit minimalem Signalisierungsaufwand eingestellt werden. Durch den Offset-Wert müssen keine negativen Vorhaltzeiten übertragen werden.

Vorteilhafterweise wird der Offset-Wert so gewählt, daß die mit ihm korrespondierende Entfernung größer ist als die Strecke, welche die Mobilstation bei maximal zulässiger Geschwindigkeit zwischen zwei Aussendungen zur Vorhaltzeitbestimmung zurücklegen kann. Damit wird gewährleistet, daß auch bei Maximalgeschwindigkeit der Mobilstation sofort eine zuverlässige Sendezeitpunkteinstellung erfolgen kann.

Die Erfindung wird nachfolgend bezugnehmend auf zeichnerische Darstellungen anhand von Ausführungsbeispielen näher erläutert.

Dabei zeigen
- FIG 1: ein Blockschaltbild eines Zeitmultiplex-Mobilfunksystems zur Paketdatenübertragung,
- FIG 2: einen Frequenzkanal mit Zeitmultiplex,
- FIG 3: die Zeitschlitze eines Kanals für eine Paketdatenübertragung,
- FIG 4: eine Einstellung der Vorhaltzeit für einen Zugriffsblock in Aufwärtsrichtung, und
- Tabelle 1, 2 und 3: die Benutzung von Zeitschlitzen zur Signalisierung.

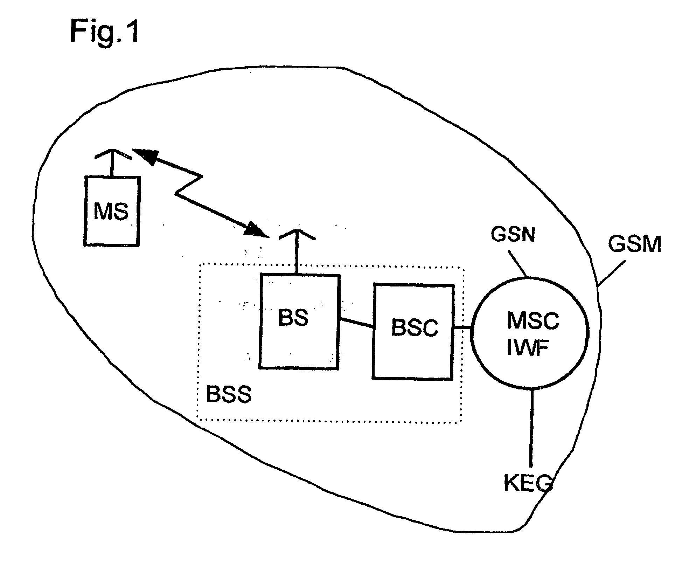

Das Zeitmultiplex-Mobilfunksystem nach FIG 1 ist beispielsweise ein GSM-Mobilfunknetz GSM, das zumindest ein Basisstationssystem BSS mit einer Steuereinrichtung BSC und einer Basisstation BS enthält. Im Funkbereich der einen dargestellten Basisstation BS befinden sich Mobilstationen MS. Das Basisstationssystem BSS stellt die Verbindung zu weiteren Einrichtungen des GSM-Mobilfunknetzes GSM her.

Diese weiteren Einrichtungen sind z.B. eine Mobilvermittlungsstelle MSC und eine Einheit zur Realisierung von Interworking-Funktionen IWF. Das Zusammenwirken von Mobilvermittlungsstelle MSC und Interworking-Funktionen IWF ergibt eine Paketvermittlungsstelle, die auch als GSN (GPRS support node bezeichnet wird. Diese Paketvermittlungsstelle ist an eine MSC zur Sprachvermittelung angeschlossen, alternativ könnte sie als abgesetzte eigene Einheit realisiert werden.

Das GSM-Mobilfunknetz GSM kann mit weiteren Kommunikationsnetzen verbunden sein. Beispielhaft ist ein weiteres Kommunikationsendgerät KEG mit dem GSM-Mobilfunknetz verbindbar oder selbst Bestandteil dieses GSM-Mobilfunknetzes GSM.

Das GSM-Mobilfunknetz GSM soll zur Paketdatenübertragung parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen.

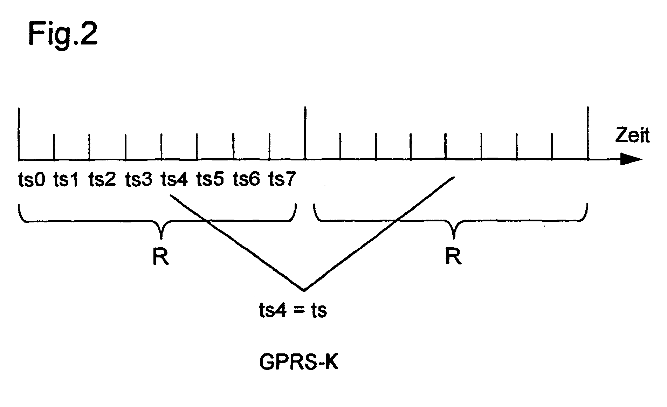

Die Funkschnittstelle zwischen den Mobilstationen MS und einer Basisstation BS ist durch eine Frequenz und zumindest einen Zeitschlitz ts charakterisiert. Nach FIG 2 werden beispielsweise acht Zeitschlitze ts (ts0 bis ts7) zu einem Rahmen R zusammengefaßt. Der Rahmen R, wiederholt sich zyklisch, wobei zu einem Kanal ein wiederkehrender Zeitschlitz beispielsweise der Zeitschlitz ts = ts4 gehört. Dieser Zeitschlitz ts wird im folgenden als Kanal GPRS-K für die Paketdatenübertragung im Sinne des Dienstes GPRS (General Paket Radio Services) verwendet.

Soll eine Mobilstation MS diesen Dienst nutzen, dann führt sie entsprechend der GSM-Terminologie einen willkürlichen Zugriff (Random Access) mit einem kurzen sogenannten access burst durch und wechselt auf einen dedizierten Kontrollkanal. Es folgt eine Authentifikation und das Setzen des Kontexts bezüglich einer logischen Verbindung (standby state). Soll das weitere Kommunikationsendgerät KEG über den Paketdatendienst mit einer Mobilstation MS kommunizieren, erfolgt netzseitig ein Anruf (Paging) sowie der geschilderte willkürliche Zugriff.

Für den Fall, daß die Mobilstation MS Datenpakete senden oder empfangen soll (ready state), findet beim Bestehen einer logischen Verbindung ein weiterer willkürlicher Zugriff statt. Hierbei wird der Mobilstation MS auch eine Kurzkennung id und der entsprechende GPRS-Kanal GPRS-K zugewiesen. Worauf netzseitig die Vorhaltzeit (Timing Advance) ta und die Empfangspegel pb in der Basisstation BS bestimmt werden. Daraufhin werden der Mobilstation MS vier aufeinanderfolgende Zeitschlitze T als ein Paketdatenblock TCH in Aufwärtsrichtung zugewiesen. Gegebenenfalls wird zusätzlich eine Angabe zur Sendeleistungskontrolle übertragen.

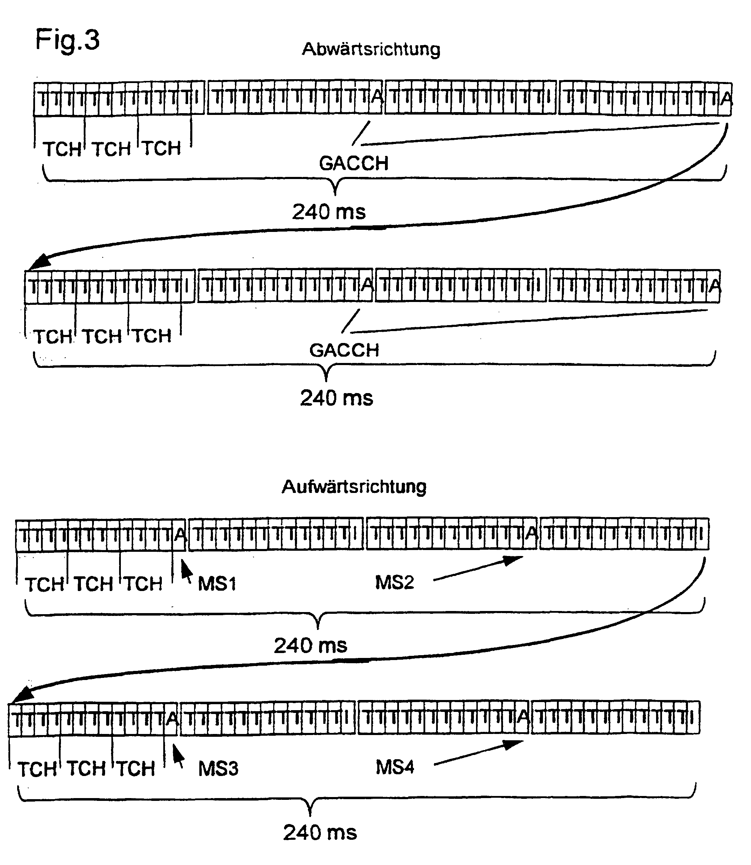

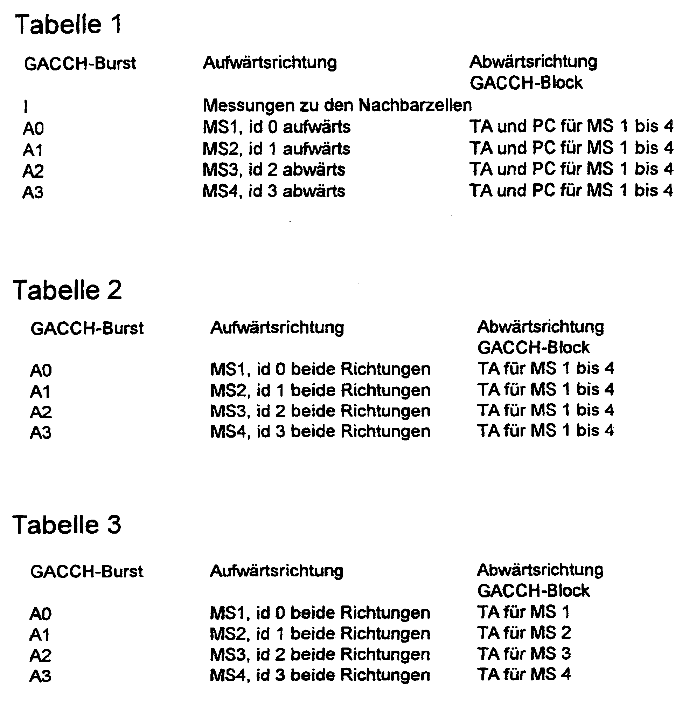

Die Paketdatenübertragung und die zugehörige Signalisierung soll nun anhand von FIG 3 und der Tabellen 1 und 2 gezeigt werden.

Es werden jeweils vier Zeitschlitze T zur Paketdatenübertragung zu einem Paketdatenblock TCH zusammengefaßt. Drei solche Paketdatenblöcke TCH und ein Zeitschlitz A,I zur Signalisierung wiederholen sich viermal zu einem Makrorahmen, der 52 Rahmen R umfaßt. Dies gilt sowohl für die Aufwärtsals auch für die Abwärtsrichtung. Weiterhin bilden zwei solcher Makrorahmen wiederum einen Rahmen höherer Ordnung. Ein Makrorahmen dauert 240 ms.

Die Informationen eines Paketdatenblockes TCH mit vier Zeitschlitzen T sind verschachtelt. Die Zuweisung von Paketdatenblöcken TCH zu verschiedenen Mobilstationen MS erfolgt in Aufwärts- und Abwärtsrichtung flexibel auf eine oder mehrere Mobilstationen MS. Damit können verschiedene Datenraten realisiert werden. Zwischen den Mobilstationen MS kann über den Zugriff auf den GPRS-Kanal anhand von Priorisierungen entschieden werden. Im folgenden werden Aufwärtsrichtung und Abwärtsrichtung getrennt betrachtet, wobei eine Mobilstation MS durchaus in beide Richtungen kommunizieren kann. Die Zuordnung von Paketdatenblöcken TCH während des Bestehens einer logischen Verbindung erfolgt im Band, d.h. innerhalb der Paketdatenblöcke TCH werden den Mobilstationen MS durch Indikatormeldungen angezeigt, wer folgende Paketdatenblöcke TCH nutzen kann.

In Abwärtsrichtung werden nicht nur vier aufeinanderfolgende Zeitschlitze T zur Paketdatenübertragung verschachtelt, sondern es findet auch eine Verschachtelung der Signalisierungsinformationen statt, die einen Signalisierungsblock GACCH bilden. Dabei wird gemäß Fig. 3 jeder zweite Zeitschlitz A zur Signalisierung zum Signalisierungsblock GACCH zusammengefaßt, währenddessen dazwischenliegende Zeitschlitze I zu Messungen der Mobilstationen MS in Nachbarzellen verwendet werden. Die Abfolge von Zeitschlitzen A,I zur Signalisierung und Nachbarkanalmessung kann auch einer anderen Sequenz, beispielsweise A/I = 1/3 folgen. Ein Umschalten der Sequenzen wird nach den Übertragungsbedinungen von der Basisstation BS vorgenommen.

Die Nachbarzellenmessungen dienen der Ermittelung von Basisstationen BS, die bei einer Verschlechterung der Übertragungsbedingungen auf dem momentan zugewiesenen Kanal ausgewählt werden können. In der Mobilstation liegt durch diese Messungen eine Prioritätsliste vor.

Ein Signalisierungsblock GACCH beinhaltet dabei Informationen für mehrere Mobilstationen MS, siehe dazu Tabelle 1 und Tabelle 2. Alternativ - Tabelle 3 - ist es möglich die Anzahl der Zeitschlitze pro Signalisierungsblock GACCH zu verringern und zusätzlich oder alternativ zu einer Verschachtelung die Konfigurationsdaten (Vorhaltzeit TA und/oder Sendeleistungseinstellung PC) in einem Zeitschlitz mehrfach zu übertragen bzw. sie mit einem weiteren Schutz zu versehen, z.B. durch eine Kodierung.

Besonders vorteilhaft ist das erfindungsgemäße Verfahren, wenn lediglich eine Vorhaltzeitbestimmung vorgenommen wird und diese wie nachstehend geschildert signalisiert wird. Die Sendeleistungsermittlung erfolgt davon unabhängig. Durch eine solche Trennung der Ermittelung beider Konfigurationsdaten TA, PC entsteht ein höhere Flexibilität bei der Konfigurierung der Funkschnittstelle. Zur Vereinfachung wird jedoch im folgenden von einem gleichartigen Regelkreis bei der Bestimmung von Vorhaltzeit TA und Sendeleistungseinstellung PC ausgegangen.

Beispielsweise enthält der GACCH-Block die Werte für die Vorhaltzeit TA und die Sendeleistungseinstellung PC (z.B. Empfangspegel pb der Basisstation BS oder die geforderte Sendeleistung) für die Mobilstationen 1 bis 4. In diesem Fall beträgt also die Dauer bis zur Wiederholung der Vorhaltzeit TA und der Sendeleistungswerte PC 480 ms. Erfolgt eine Signalisierung nur für zwei Mobilstationen, beispielsweise zwei Mobilstationen, die in Aufwärtsrichtung senden, kann die Anzahl der Kurzkennungen id auf zwei reduziert werden und die Verzögerungszeit beträgt nunmehr 240 ms.

In Aufwärtsrichtung erfolgt die Zuordnung der Zeitschlitze A zur Signalisierung folgendermaßen. Nach Tabelle 1 erfolgt die Zuweisung der Zeitschlitze A0 bis A1 für die Mobilstationen 1 bis 2 in Aufwärtsrichtung (Kurzkennungen id 0 bis 1) und die Zeitschlitze A2 bis A3 für die Mobilstationen MS 2 bis MS3 in Abwärtsrichtung (Kurzkennungen id 2 bis 3). Kommunizieren die Mobilstationen MS sowohl in Aufwärts- als auch in Abwärtsrichtung, dann erfolgt die Zuweisung der Zeitschlitze A zur Signalisierung gemäß Tabelle 2.

Bei der Zuweisung nach Tabelle 1, also der getrennten Betrachtung von Aufwärtsrichtung und Abwärtsrichtung sendet jede Mobilstation MS in dem ihr zugeordneten Zeitschlitz A zur Signalisierung einen speziell kodierten access burst an die Basisstation BS. Darin signalisiert sie, mit welcher Feldstärke und Qualität (RXLEV, RXQUAL) die Signalisierungsblöcke GACCH der Basisstation BS in Abwärtsrichtung empfangen wurden. Die Basisstation BS mißt die Aussendungen (zugewiesene Zeitschlitze A zur Signalisierung) der Mobilstation MS aus, um eine Vorhaltzeit TA und eine Sendeleistung bzw. die Sendeleistungsänderung PC der Mobilstation MS zu bestimmen und ihr zu signalisieren. Damit erhält die Mobilstation MS Werte, die sie benutzt wenn Paketdatenblöcke TCH in Aufwärtsrichtung gesendet werden.

Die von der Mobilstation MS gemeldeten Empfangspegel pm benutzt die Basisstation BS dazu, eine angemessene Sendeleistung einzustellen, wenn nachfolgend Paketdatenblöcke TCH für die Datenübertragung in Abwärtsrichtung an die Mobilstation MS gesendet werden. Für die Aktualität der Vorhaltzeiten TA und Sendeleistungswerte in Aufwärtsrichtung ergeben sich folgende Verzögerungszeiten: Die Mobilstation MS erhält im Abstand von 480 ms neue Werte. Bei der Sequenz der Zeitschlitze I, A wird darauf geachtet, daß die zeit zwischen Signalisierung in Aufwärtsrichtung durch eine Mobilstation MS und ein für diese Mobilstation MS vorgesehenen Übertragung in Abwärtsrichtung gering ist.

Nach Tabelle 3 wurde die Signalisierung in Abwärtsrichtung dahingehend ausgestaltet, daß jeder Mobilstation 1 bis 4 ein individueller Zeitschitz A zur Signalisierung zugewiesen wurde, in dem die Vorhaltzeit TA mit einer zusätzlichen Fehlersicherung übertragen wird. Je weniger Mobilstationen den gemeinsamen Kanal GPRS-K nutzen, um so weniger solche Zeitschlitze A zur Signalisierung werden benötigt und um so mehr Zeitschlitze I stehen zu Nachbarzellenmessungen, zur zusätzlichen Signalisierung (z.B. Verbindung auflösen, Frequenzwechsel) oder auch einer zusätzlichen Datenübertragung zur Verfügung.

Die Ausführungsbeispiele können dahingehend modifiziert werden, daß Kurzkennungen id derart verwendet werden, daß mit Vorzug die Kurzkennungen id 1 bzw. 3 benutzt werden. In diesem Falle ergeben sich Verzögerungszeiten nahe dem günstigsten Fall von 240 ms. Auch bei einer doppelten Verwendung von Kurzkennungen id verringert sich der Abstand zwischen dem Eintreffen neuer Werte. Wird die Zahl der Kurzkennungen weiter beschränkt, dann verkürzt sich auch die Verzögerungszeit. Sind für längere Zeiten nicht aktualisierte Werte akzeptabel, so kann die Anzahl der Kurzkennungen id auch in Viererschritten auf 8, 12, 16 usw. erhöht werden.

Die Vergabe der Kurzkennungen id wird insbesondere den Übertragungsbedingungen, d.h. der zuvor registrierten Veränderungen von Vorhaltzeit TA und Sendeleistungsänderungen angepaßt. Ebenso wird berücksichtigt, wieviele Mobilstationen MS die Paketdatenübertragung über den GPRS-Kanal GPRS-K nutzen wollen.

Durch die feste Zuordnung von Zeitschlitzen A zur Signalisierung in Aufwärtsrichtung ist die Basisstation BS ständig über die aktuellen Übertragungsverhältnisse der Funkschnittstelle informiert und kann entsprechende Konfigurierung der Funkschnittstelle vornehmen. Für Mobilstationen MS, die derartig in Aufwärtsrichtung signalisieren und denen in Abwärtsrichtung über die Signalisierungsblöcke GACCH die Werte zur Vorhaltzeit TA und zur Sendeleistungseinstellung PC übermittelt werden, existiert ein geschlossener Regelkreis. Der Regelkreis ist auch dann möglich, wenn die Mobilstation MS momentan keine Paketdaten sendet oder empfängt.

Falls jedoch der Mobilstation MS auch Paketdatenblöcke TCH in Aufwärts- oder Abwärtsrichtung zugewiesen sind, können auch dafür Werte für die Vorhaltzeit TA oder den Empfangspegel pb, pb zusätzlich berechnet und übermittelt werden.

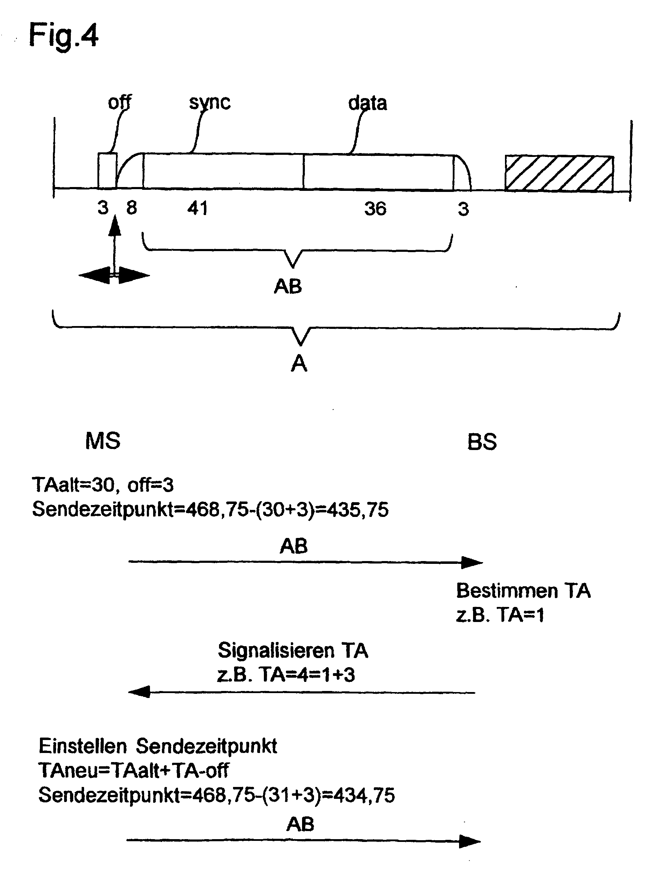

In Aufwärtsrichtung werden Zugriffsfunkblöcke AB nach FIG 4 übertragen. Es wird von einer ursprünglichen Vorhaltzeit von TAalt=30 ausgegangen. Anhand der Aussendungen nimmt die Basisstation die Bestimmung der Vorhaltzeit TA (z.B. TA=1 für eine Mobilstation MS, die sich von der Basisstation BS entfert) vor. Der im Zeitschlitz A zur Signalisierung gesendete Zugriffsfunkblock AB besteht aus einer Synchronisationssequenz sync, gefolgt von einem Datenteil data. Dem Zugriffsfunkblock AB geht eine Schutzzeit von 8 bit voran und eine Schutzzeit von 3 bit folgt. In den Schutzzeiten findet ein Einschwingen der hochfrequenten Übertragung statt. Weiterhin ist ein Offset-Wert off von 3 bit gezeigt, der die Einstellung des Sendezeitpunkts beeinflußt.

Die in FIG 4 gezeigt Grundeinstellung des Sendezeitpunktes von 468,75 bit entspricht dem aus dem GSM-Mobilfunksystem bekannten Versatz der Zeitraster zwischen Ab- und Aufwärtsrichtung.

Mit einer durch die Basisstation BS bestimmten, mit dem Offset-Wert off beaufschlagten und in Abwärtsrichtung signalisierten Vorhaltzeit TA (im Wertebereich von 0..64) wird durch die Mobilstation MS eine neue Vorhaltzeit TAneu (TAneu=TAalt+TA-off) bestimmt. Durch Berücksichtigung der Grundeinstellung und Subtraktion der neuen Vorhaltzeit TAneu sowie des Offset-Wertes off wird der aktuelle Sendezeitpunkt für das Senden des nächsten Zugriffsblocks AB in Aufwärtsrichtung eingestellt.

Damit wird vermieden, daß negative Vorhaltzeiten TA signalisiert werden müssen, auch wenn sich die Mobilstation MS der Basisstation BS nähert. Fehler, die beim Messen bzw. Einstellen der Vorhaltzeit TA entstehen, werden nicht akkumuliert, sondern beim folgenden Abgleich korrigiert. Die Mobilstation MS hat durch die eindeutige Übertragung der Vorhaltzeit TA einen Einstellwert für den Sendezeitpunkt im Zeitschlitz A zur Signalisierung und im Zeitschlitz T zur Paketdatenübertragung zur Verfügung.

Durch die Wahl des Offset-Wertes off mit 3 bit kann auch bei einer maximalen Geschwindigkeit von 500 km/h und einer Periode der Wiederholung der Bestimmung der Vorhaltzeit von 4 s ein ständiges korrektes Einstellen des Sendezeitpunktes erfolgen. Durch diesen Wert wird auch die Schutzzeit nicht unnötig verkürzt, so daß ggf. ein zusätzlicher Funkblock im gleichen Zeitschlitz A zur Signalisierung übertragen werden kann.

Insbesondere eignet sich das erfindungsgemäße Verfahren zur Unterstützung einer paketorientierte Übertragen von Informationen über die Funkschnittstelle für Telematikapplikationen, Fax und Dateiübertragung, Point of Sales Realisierungen, Flottenmanagement und Verkehrsleitsysteme.

## Patentansprüche

1. Verfahren zur Konfigurierung einer Funkschnittstelle zwischen einer Mobilstation (MS) und einer Basisstation (BS) eines Zeitmultiplex-Mobilfunksystems für eine Paketdatenübertragung, wobei
- die Übertragung von einer Mobilstation (MS) zur Basisstation (BS) als Aufwärtsrichtung und von der Basisstation (BS) zu einer Mobilstation (MS) als Abwärtsrichtung bezeichnet wird,
- ein Kanal (GPRS-K) durch zumindest einen Zeitschlitz (ts, T, A) pro Zeitmultiplex-Rahmen (R) gebildet wird, wobei 52 Rahmen (R) zu einen Makrorahmen zusammengefaßt werden,
- die Paketdatenübertragung mehrerer Mobilstationen (MS) über den gemeinsamen Kanal (GPRS-K) erfolgt,
- im Kanal (GPRS-K) in zyklischen Abständen ein Zeitschlitz (ts, A, I) zur Signalisierung vorgesehen ist,
**dadurch gekennzeichnet, daß**
durch die Basisstation (BS) der Mobilstation (MS) nach einer vorgebbaren Sequenz exklusiv ein Zeitschlitz (ts, A) zur Signalisierung für die Aufwärtsrichtung zugewiesen wird, und
die Mobilstation (MS) in dem zugewiesenen Zeitschlitz (ts, A) zur Signalisierung sendet, auch wenn die Mobilstation (MS) während der Dauer des aktuellen und folgenden Makrorahmens keine Paketdaten überträgt.

2. Verfahren nach Anspruch 1,
bei dem aus Aussendungen der Mobilstation (MS) in dem zugewiesenen Zeitschlitz (ts, A) zur Signalisierung eine Bestimmung der Vorhaltzeit (TA) der jeweilige Mobilstation (MS) durchgeführt wird, und
die Vorhaltzeit (TA) in einem Zeitschlitz (ts, A) zur Signalisierung in Abwärtsrichtung an die entsprechende Mobilstation (MS) übertragen wird.

3. Verfahren nach Anspruch 1 oder 2,
bei dem das Bestimmen der Vorhaltzeit (TA) und ein Bestimmen von Werten zur Sendeleistungseinstellung (PC) unabhängig voneinander erfolgt.

4. Verfahren nach Anspruch 3,
bei dem die Bestimmung der Vorhaltzeit (TA) und/oder der Werte zur Sendeleistungseinstellung (PC) zusätzlich aus den Zeitschlitzen (ts, T) zur Paketdatenübertragung vorgenommen wird.

5. Verfahren nach einem der vorhergehenden Ansprüche,
bei dem in den Zeitschlitzen (ts, A) zur Signalisierung in Aufwärtsrichtung für bestimmte Konfigurationsdaten (TA, PC) längere Sendeblocktypen verwendet werden.

6. Verfahren nach einem der vorhergehenden Ansprüche,
bei dem in Abwärtsrichtung bestimmte Konfigurationsdaten (PC) in Zeitschlitzen (T) zur Paketdatenübertragung übertragen werden.

7. Verfahren nach einem der vorhergehenden Ansprüche,
bei dem die Konfiguration der Funkschnittstelle bezüglich einer Vorhaltzeit (TA) durch die Basisstation (BS) ohne Steuerung durch einen Basisstationscontroller (BSC) erfolgt.

8. Verfahren nach einem der vorherigen Ansprüche,
bei dem mehrere Zeitschlitze (ts, A) zur Signalisierung zu einem Signalisierungsblock (GACCH) zusammengefaßt werden.

9. Verfahren nach Anspruch 8,
bei dem das Zusammenfassen der Zeitschlitze (ts, A) zur Signalisierung nach einer vorgebbaren Sequenz erfolgt, wobei verbleibende Zeitschlitze (I) für eine Nachbarzellenmessung der Mobilstationen (MS) vorgesehen sind.

10. Verfahren nach einem der vorherigen Ansprüche,
bei dem Informationen in Zeitschlitzen (ts, A) zur Signalisierung mit einer zusätzlichen Kodierung versehen werden und/oder mehrfach in den Zeitschlitzen (ts, A) enthalten sind.

11. Verfahren nach einem der vorhergehenden Ansprüche,
bei dem die Paketdatenübertragung in beide Übertragungsrichtungen unabhängig voneinander erfolgt.

12. Verfahren nach einem der vorhergehenden Ansprüche,
bei dem die Mobilstationen (MS) für die Paketdatenübertragung zusätzlich mit Kurzkennungen (id) bezeichnet sind und den Mobilstationen (MS) über die Zeitschlitze (ts, A) zur Signalisierung in Abwärtsrichtung durch Indikatormeldungen, die Kurzkennungen (id) und Zeitschlitzbezeichnungen enthalten, ein oder mehrere Zeitschlitze (ts, A) zur Signalisierung in Aufwärtsrichtung zugewiesen werden.

13. Verfahren nach einem der vorhergehenden Ansprüche,
bei dem von einer Mobilstation (MS) pro Zeitschlitz (ts, A) zur Signalisierung in Aufwärtsrichtung eine abgeschlossene, den Empfangspegel (pm) der Mobilstation (MS) enthaltende Meldung übermittelt wird.

14. Verfahren nach einem der vorhergehenden Ansprüche,
bei dem Aussendungen der Mobilstation (MS) in den ihr zugeordneten Zeitschlitzen (ts, A) zur Signalisierung Zugriffsblöcke (AB) mit einer verlängerten vorangehenden und/oder nachfolgenden Schutzzeit versehen sind, deren Sendezeitpunkt sich aus einem vorhergehenden Sendezeitpunkt, einer signalisierten Vorhaltzeit (TA) und einem Offset-Wert (off) ergibt.

15. Verfahren nach Anspruch 14, bei dem
der Offset-Wert (off) so gewählt wird, daß die mit ihm korrespondierende Entfernung größer ist als die Strecke, welche die Mobilstation (MS) bei maximal zulässiger Geschwindigkeit zwischen zwei Aussendungen zur Vorhaltzeitbestimmung zurücklegen kann.

16. Basisstationssystem (BSS) zur Konfigurierung einer Funkschnittstelle zwischen einer Mobilstation (MS) und einer Basisstation (BS) eines Zeitmultiplex-Mobilfunksystems für eine Paketdatenübertragung, wobei
- die Übertragung von einer Mobilstation (MS) zur Basisstation (BS) als Aufwärtsrichtung und von der Basisstation (BS) zu einer Mobilstation (MS) als Abwärtsrichtung bezeichnet wird,
- ein Kanal (GPRS-K) durch zumindest einen Zeitschlitz (ts, T, A) pro Zeitmultiplex-Rahmen (R) gebildet wird, wobei 52 Rahmen (R) zu einen Makrorahmen zusammengefaßt werden,
- die Paketdatenübertragung mehrerer Mobilstationen (MS) über den gemeinsamen Kanal (GPRS-K) erfolgt,
- im Kanal (GPRS-K) in zyklischen Abständen ein Zeitschlitz (ts, A) zur Signalisierung vorgesehen ist,
mit einer Steuereinrichtung (BSC) zur Zuweisung von Zeitschlitzen (ts, A) an die Mobilstation (MS),
**dadurch gekennzeichnet, daß**
die Steuereinrichtung (BSC) derart ausgeprägt ist, daß
der Mobilstation (MS) nach einer vorgebbaren Sequenz exklusiv ein Zeitschlitz (ts, A) zur Signalisierung für die Aufwärtsrichtung zugewiesen wird, wobei die Zuweisung unabhängig von einer Paketedatenübertragung ist, so daß die Mobilstation (MS) in dem zugewiesenen Zeitschlitz (ts, A) zur Signalisierung sendet, auch wenn die Mobilstation (MS) während der Dauer des aktuellen und folgenden Makrorahmens keine Paketdaten überträgt.

## Claims

1. Method for configuration of a radio interface between a mobile station (MS) and a base station (BS) of a time-division multiplex mobile radio system for packet data transmission, wherein
- the transmission from a mobile station (MS) to the base station (BS) is called the uplink direction, and from the base station (BS) to a mobile station (MS) is called the downlink direction,
- a channel (GPRS-K) is formed by at least one time slot (ts, T, A) per time-division multiplex frame (R), 52 frames (R) being combined to form a macroframe,
- the packet data transmission from a plurality of mobile stations (MS) takes place via the common channel (GPRS-K),
- a time slot (ts, A, I) for signalling is provided at cyclic intervals in the channel (GPRS-K),
**characterized in that**
just one time slot (ts, A) for signalling for the uplink direction is allocated by the base station (BS) to the mobile station (MS) in accordance with a sequence which can be predetermined, and the mobile station (MS) transmitting in the allocated time slot (ts, A) for signalling, even if the mobile station (MS) does not transmit any packet data for the duration of the current and next macroframe.

2. Method according to Claim 1,
in which the timing advance (TA) for the respective mobile station (MS) is determined from transmissions by the mobile station (MS) in the allocated time slot (ts, A), and
the timing advance (TA) is transmitted in a time slot (ts, A) for signalling in the downlink direction to the corresponding mobile station (MS).

3. Method according to Claim 1 or 2,
in which the timing advance (TA) and values for the transmission power setting (PC) are defined independently of one another.

4. Method according to Claim 3,
in which the timing advance (TA) and/or the values for the transmission power setting (PC) are additionally defined from the time slots (ts, T) for packet data transmission.

5. Method according to one of the preceding claims,
in which longer transmission block types are used for specific configuration data (TA, PC) in the time slots (ts, A) for signalling in the uplink direction.

6. Method according to one of the preceding claims,
in which configuration data (PC) defined in the downlink direction are transmitted in time slots (T) for packet data transmission.

7. Method according to one of the preceding claims,
in which the timing advance (TA) for the configuration of the radio interface is provided by the base station (BS) without being controlled by a base station controller (BSC).

8. Method according to one of the preceding claims,
in which a plurality of time slots (ts, A) for signalling are combined to form a signalling block (GACCH).

9. Method according to Claim 8,
in which the time slots (ts, A) for signalling are combined in accordance with a sequence which can be predetermined, remaining time slots (I) being provided for an adjacent cell measurement of the mobile station (MS).

10. Method according to one of the preceding claims,
in which information in time slots (ts, A) for signalling is provided with additional coding and/or is included in the time slots (ts, A) more than once.

11. Method according to one of the preceding claims,
in which the packet data transmission takes place in both transmission directions independently of one another.

12. Method according to one of the preceding claims,
in which the mobile stations (MS) for packet data transmission are additionally designated by abbreviated identifiers (id) and, via the time slots (ts, A) for signalling in the downlink direction, one or more time slots (ts, A) for signalling in the uplink direction are allocated to the mobile stations (MS) by means of indicator messages which contain abbreviated identifiers (id) and time slot designations.

13. Method according to one of the preceding claims,
in which a self-contained message, which contains the reception level (pm) of the mobile station (MS), is transmitted by a mobile station (MS) per time slot (ts, A) for signalling in the uplink direction.

14. Method according to one of the preceding claims,
in which transmissions from the mobile station (MS) in the time slots (ts, A) for signalling allocated to it are provided with access blocks (AB) having an extended preceding and/or subsequent guard time, whose transmission time results from a preceding transmission time, a signalled timing advance (TA) and an offset value (off).

15. Method according to Claim 14, in which
the offset value (off) is chosen such that the range which corresponds to it is greater than the distance which the mobile station (MS) can travel between two transmissions for timing advance definitions at the maximum permissible speed.

16. Base station system (BSS) for configuration of a radio interface between a mobile station (MS) and a base station (BS) of a time-division multiplex mobile radio system for packet data transmission, wherein
- the transmission from a mobile station (MS) to the base station (BS) is called the uplink direction, and from the base station (BS) to a mobile station (MS) is called the downlink direction,
- a channel (GPRS-K) is formed by at least one time slot (ts, T, A) per time-division multiplex frame (R), 52 frames (R) being combined to form a macroframe,
- the packet data transmission from a plurality of mobile stations (MS) takes place via the common channel (GPRS-K),
- a time slot (ts, A) for signalling is provided at cyclic intervals in the channel (GPRS-K),
having a control device (BSC) for allocating time slots (ts, A) to the mobile station (MS),
**characterized in that**
the control device (BSC) is distinguished by the fact that just one time slot (ts, A) for signalling for the uplink direction is allocated to the mobile station (MS) after a sequence which can be predetermined, in which case the allocation is independent of any packet data transmission, so that the mobile station (MS) transmits in the time slot (ts, A) allocated for signalling, even if the mobile station (MS) does not transmit any packet data for the duration of the current and next macroframe.

## Revendications

1. Procédé pour la configuration d'une interface radio entre une station mobile (MS) et une station de base (BS) d'un système radio mobile à multiplexage dans le temps pour une transmission de données par paquets,
- la transmission d'une station mobile (MS) vers la station de base (BS) étant appelée direction ascendante et la transmission de la station de base (BS) vers une station mobile (MS) étant appelée direction descendante,
- un canal (GPRS-K) étant constitué par au moins un créneau temporel (ts, T, A) par trame de multiplexage dans le temps (R), 52 trames (R) étant regroupées pour former une macro-trame,
- la transmission de données par paquets de plusieurs stations mobiles (MS) se faisant par l'intermédiaire du canal commun (GPRS-K),
- un créneau temporel (ts, A, I) de signalisation étant prévu à intervalles cycliques dans le canal (GPRS-K),
**caractérisé en ce que**
la station de base (BS) affecte exclusivement à la station mobile (MS) un créneau temporel (ts, A) de signalisation pour la direction ascendante selon une séquence prédéterminable et **en ce que** la station mobile (MS) émet dans le créneau temporel (ts, A) de signalisation affecté même lorsque la station mobile (MS) ne transmet pas de données de paquets pendant la durée de la macro-trame actuelle et de la macro-trame suivante.

2. Procédé selon la revendication 1, dans lequel il est procédé à une détermination de l'avance de temps (TA) de chaque station mobile (MS) sur la base d'émissions de la station mobile (MS) dans le créneau temporel (ts, A) de signalisation affecté et dans lequel l'avance de temps (TA) est transmise à la station mobile (MS) correspondante dans un créneau temporel (ts, A) de signalisation en direction descendante.

3. Procédé selon la revendication 1 ou 2, dans lequel la détermination de l'avance de temps (TA) et une détermination de valeurs pour le réglage de la puissance d'émission (PC) se font indépendamment l'une de l'autre.

4. Procédé selon la revendication 3, dans lequel il est procédé à la détermination de l'avance de temps (TA) et/ou des valeurs pour le réglage de la puissance d'émission (PC) additionnellement sur la base des créneaux temporels (ts, T) pour la transmission de données par paquets.

5. Procédé selon l'une des revendications précédentes, dans lequel des types de blocs d'émission plus longs sont utilisés dans les créneaux temporels (ts, A) de signalisation en direction ascendante pour certaines données de configuration (TA, PC).

6. Procédé selon l'une des revendications précédentes, dans lequel certaines données de configuration (PC) sont transmises en direction descendante dans des créneaux temporels (T) pour la transmission de données par paquets.

7. Procédé selon l'une des revendications précédentes, dans lequel la configuration de l'interface radio, concernant une avance de temps (TA), se fait par la station de base (BS) sans contrôle par un contrôleur de station de base (BSC).

8. Procédé selon l'une des revendications précédentes, dans lequel plusieurs créneaux temporels (ts, A) de signalisation sont regroupés en un bloc de signalisation (GACCH).

9. Procédé selon la revendication 8, dans lequel le regroupement des créneaux temporels (ts, A) de signalisation se fait selon une séquence prédéterminable, des créneaux temporels restants (I) étant prévus pour une mesure de cellules voisines des stations mobiles (MS).

10. Procédé selon l'une des revendications précédentes, dans lequel des informations, dans des créneaux temporels (ts, A) de signalisation, sont pourvues d'un codage additionnel et/ou sont contenues plusieurs fois dans les créneaux temporels (ts, A).

11. Procédé selon l'une des revendications précédentes, dans lequel la transmission de données par paquets se fait dans les deux directions de transmission indépendamment l'une de l'autre.

12. Procédé selon l'une des revendications précédentes, dans lequel les stations mobiles (MS), pour la transmission de données par paquets, sont additionnellement repérées par des signaux d'identification courts (id) et dans lequel un ou plusieurs créneaux temporels (ts, A) de signalisation en direction ascendante sont affectés aux stations mobiles (MS) par l'intermédiaire des créneaux temporels (ts, A) de signalisation en direction descendante par des messages indicateurs contenant des signaux d'identification courts (id) et des identificateurs de créneaux temporels.

13. Procédé selon l'une des revendications précédentes, dans lequel une station mobile (MS) transmet un message fermé, contenant le niveau de réception (pm) de la station mobile (MS), par créneau temporel (ts, A) de signalisation en direction ascendante.

14. Procédé selon l'une des revendications précédentes, dans lequel des blocs d'accès (AB) sont pourvus d'un temps de protection prolongé, les précédant et/ou les suivant, lors d'émissions de la station mobile (MS) dans les créneaux temporels de signalisation qui lui sont affectés, l'instant d'émission desdits blocs résultant d'un instant d'émission précédent, d'une avance de temps (TA) signalée et d'une valeur offset (off).

15. Procédé selon la revendication 14, dans lequel la valeur offset (off) est sélectionnée de manière telle que l'éloignement qui lui correspond est supérieur à la distance que la station mobile (MS) peut parcourir à la vitesse maximale autorisée entre deux émissions pour la détermination de l'avance de temps.

16. Système de station de base (BSS) pour la configuration d'une interface radio entre une station mobile (MS) et une station de base (BS) d'un système radio mobile à multiplexage dans le temps pour une transmission de données par paquets,
- la transmission d'une station mobile (MS) vers la station de base (BS) étant appelée direction ascendante et la transmission de la station de base (BS) vers une station mobile (MS) étant appelée direction descendante,
- un canal (GPRS-K) étant constitué par au moins un créneau temporel (ts, T, A) par trame de multiplexage dans le temps (R), 52 trames (R) étant regroupées pour former une macro-trame,
- la transmission de données par paquets de plusieurs stations mobiles (MS) se faisant par l'intermédiaire du canal commun (GPRS-K),
- un créneau temporel (ts, A) de signalisation étant prévu à intervalles cycliques dans le canal (GPRS-K),
avec un contrôleur (BSC) pour l'affectation de créneaux temporels (ts, A) à la station mobile (MS),
**caractérisé en ce que**
le contrôleur (BSC) est conçu de manière à ce qu'un créneau temporel (ts, A) de signalisation pour la direction ascendante est affecté exclusivement à la station mobile (MS) selon une séquence prédéterminable, ladite affectation étant indépendante d'une transmission de données par paquets, de sorte que la station mobile (MS) émet dans le créneau temporel (ts, A) de signalisation affecté même lorsque ladite station mobile (MS) ne transmet pas de données de paquets pendant la durée de la macro-trame actuelle et de la macro-trame suivante.
